# EUROPÄISCHE PATENTSCHRIFT

(11) **EP 1 147 902 B1**
(45) Veröffentlichungstag und Bekanntmachung des Hinweises auf die Patenterteilung: **09.05.2007**
(21) Anmeldenummer: 01105355.0
(22) Anmeldetag: 08.03.2001
(51) Int. Cl.: B41J 2/175, G01F 23/68

(54) **System zum Erfassen eines Flüssigkeitsstands in einem Behälter**
Tank liquid level detection system
Méthode pour détecter le niveau d'un liquide dans un réservoir

(30) Priorität: 18.04.2000 DE 10019223
(43) Veröffentlichungstag der Anmeldung: 24.10.2001
(73) Patentinhaber: PELIKAN PRODUKTIONS AG, 8132 Egg (CH)
(72) Erfinder: Locher, Philippe Georges, 8125 Zollikerberg (CH); Bürgin, Markus, 8610 Uster (CH); Kretschmer, Joachim, 8630 Rüti (CH)
(74) Vertreter: Hagemann, Heinrich

(56) Entgegenhaltungen:
- EP-A- 0 860 284
- DE-A- 4 217 669
- FR-A- 2 656 688
- US-A- 5 054 319
- US-A- 5 631 674
- PATENT ABSTRACTS OF JAPAN vol. 006, no. 156 (P-135), 17. August 1982 (1982-08-17) & JP 57 074621 A (SHARP CORP), 10. Mai 1982 (1982-05-10)

## Beschreibung

Die vorliegende Erfindung betrifft ein System zum Feststellen eines Flüssigkeitsstands in einem Behälter, insbesondere einer Tintenpatrone für einen Tintenstrahldrucker, und einen zugehörigen Behälter.

Ein solches System bzw. ein zugehöriger Behälter ist in der EP 0 860 284 A2 beschrieben. Das bekannte Flüssigkeitspegel-Erkennungssystem dient zur Detektion, ob Flüssigkeit bzw. Tinte in der Behälterkammer eines Tintenbehälters oder einer Tintenpatrone vorhanden ist oder nicht. In der Behälterwandung des bekannten Behälters ist ein feststehendes und transparentes Umlenkprisma integriert, das in die Kammer hineinsteht. Das Umlenkprisma wird von einer zum Behälter externen Lichtquelle bestrahlt und lenkt das Licht zurück auf einen externen Photodetektor, wenn der Behälter leer ist. Ist der Behälter gefüllt, tritt der Lichtstrahl durch das Umlenkprisma hindurch in die Flüssigkeit ein und wird dort diffus verteilt. Es gelangt dann kein Licht zurück zum Photodetektor. Das bekannte System kann damit im wesentlichen nur den Leerstand des Behälters erkennen.

Patent Abstracts of Japan: Bd. 006, Nr. 156 (P-135), 17. August 1982 (1982-08-17) & JP 57 074621 A (SHARP CORP), 10. Mai 1982 (1982-05-10) offenbart eine Vorrichtung zur optischen Erfassung der Füllstandshöhe in einem Behälter. Dazu sind im Behälterdeckel eine Lichtquelle sowie eine Fotodiode als Detektor integriert. Im Behälter ist ein als Reflektor ausgebildeter Schwimmer vorgesehen, dessen dem Deckel zugewandte Oberfläche von der Lichtquelle emittiertes Licht reflektiert. Das reflektierte Licht regt die Fotodetektoren an, die ein entsprechendes Signal an einen Verstärker ausgeben.

Die bekannte Vorrichtung weist kein Fenster auf, durch das Licht in den Behälter eintreten kann. Vielmehr ist bei der bekannten Vorrichtung die Lichtquelle in den Behälter integriert, so dass kein Fenster erforderlich ist. Diese Ausführung ist vergleichsweise aufwendig.

Aufgabe der vorliegenden Erfindung ist es, ein System zum Feststellen eines Flüssigkeitsstands in einem Behälter und einen zugehörigen Behälter anzugeben, mit denen mehrere Stufen des Flüssigkeitsstands erfasst werden können.

Diese Aufgabe wird durch das System nach Anspruch 1 bzw. durch den Behälter nach Anspruch 29 gelöst.

Durch die Bewegung des Reflektors in Abhängigkeit vom Pegel der Flüssigkeit in der Behälterkammer ermöglicht das erfindungsgemäße System die Detektion unterschiedlicher Flüssigkeitspegel bzw. mehrerer Pegelstufen oder auch die kontinuierliche Pegelerfassung.

Der Reflexionskörper kann mehrere zueinander gleichförmige oder ungleichförmige Vertiefungen an seiner Oberfläche haben, damit bewegungsabhängig unterschiedliche Füllstandsphasen erfasst werden können.

Der Reflexionskörper ist bevorzugt im wesentlichen ein Zylinder, in dem sich mindestens ein zylindrischer Hohlraum parallel zu einer Mittenachse des Zylinders und durchgängig zwischen den Endflächen des Zylinders erstreckt. Mit dieser Konstruktion kann eine pegelabhängige Drehung des Reflektors um seine Achse und eine entsprechend unterschiedliche Reflexion und damit Detektion von Licht erreicht werden

Es kann eine Führung vorgesehen sein, die den Reflexionskörper bei seiner Bewegung mit dem Pegel der Flüssigkeit in der Flüssigkeitskammer des Behälters führt. Die Führung ermöglicht eine geradlinige, pegelabhängige Bewegung des Reflexionskörpers auf einer vorgegebenen Strecke.

Der Reflexionskörper kann ein Schwimmer sein, der mit einer flexiblen oder starren Aufhängung an einem Deckel oder einer Wand des Behälters angebracht ist.

Der Reflexionskörper kann an der Oberfläche eine Vertiefung haben, deren Wände oder Flächen den Lichtstrahl von der Lichtquelle umlenken und die somit als Umlenkspiegel oder Umlenkreflektor wirkt.

Der Reflexionskörper kann ein Schwimmer in der Form eines transparenten Prismas oder Umlenkprismas sein, das sich mit dem Pegel der Flüssigkeit im Innern des Behälters mitbewegt.

Weitere Anwendungsmöglichkeiten der Erfindung sind z.B. der Farbtank einer Druckvorrichtung, der Wassertank einer Kaffeemaschine, eines Wasserkochers usw., ein Benzintank, ein Toilettenspülkasten oder z.B. ein Luftbefeuchter oder eine Wasserstandsanzeige für Hydrokultur.

Weitere vorteilhafte Weiterbildungen der vorliegenden Erfindung sind den Unteransprüchen zu entnehmen.

Weitere Vorteile, vorteilhafte Modifikationen und Anwendungsmöglichkeiten der vorliegenden Erfindung sind aus der nachfolgenden Beschreibung von bevorzugten Ausführungsformen der Erfindung in Verbindung mit den Zeichnungen ersichtlich. Es zeigen:
- Fig. 1: eine Querschnittsansicht durch einen Behälter mit einer ersten Ausführungsform des erfindungsgemäßen Systems entlang der Linie I in Figur 2;
- Fig. 2: eine Draufsicht auf den Behälter der Figur 1 in Richtung des Pfeiles II der Figur 1 gesehen, wobei der Behälter leer ist;
- Fig. 3: eine Querschnittsansicht des Behälters gemäß Figur 1, wobei ein geringer Flüssigkeitspegel in der Flüssigkeitskammer vorhanden ist, entlang der Linie III der Figur 4 gesehen;
- Fig. 4: eine Draufsicht des Behälters der Figur 3 in Richtung IV der Figur 3 gesehen;
- Fig. 5: eine perspektivische Ansicht des Behälters gemäß den Figuren 1 bis 4, wobei der Behälter geöffnet und eine Seitenwand des Behälters weggelassen ist;
- Fig. 6: eine Querschnittsansicht des Behälters gemäß den Figuren 1 bis 5 entlang der Schnittlinie VI in Figur 7, wobei ein hoher Flüssigkeitspegel in der Flüssigkeitkammer vorhanden ist;
- Fig. 7: eine Draufsicht auf den Behälter in Richtung VII der Figur 6 gesehen;
- Fig. 8: einen teilweisen Querschnitt durch den Behälter wie in Figur 6;
- Fig. 9: eine Querschnittsansicht eines erfindungsgemäßen Behälters mit einer zweiten Ausführungsform des erfindungsgemäßen Systems entlang der Schnittlinie IX in Figur 10 gesehen;
- Fig. 10: eine Draufsicht auf den Behälter der Figur 9 in der Richtung X der Figur 9 gesehen;
- Fig. 11: einen Querschnitt durch einen erfindungsgemäßen Behälter mit einer dritten Ausführungsform des erfindungsgemäßen Systems;
- Fig. 12: einen Querschnitt durch einen erfindungsgemäßen Behälter mit einer vierten Ausführungsform des erfindungsgemäßen Systems;
- Fig. 13: einen Querschnitt durch einen erfindungsgemäßen Behälter mit einer fünften Ausführungsform des erfindungsgemäßen Systems; und
- Fig. 14: einen Querschnitt durch einen erfindungsgemäßen Behälter mit einer sechsten Ausführungsform der vorliegenden Erfindung.

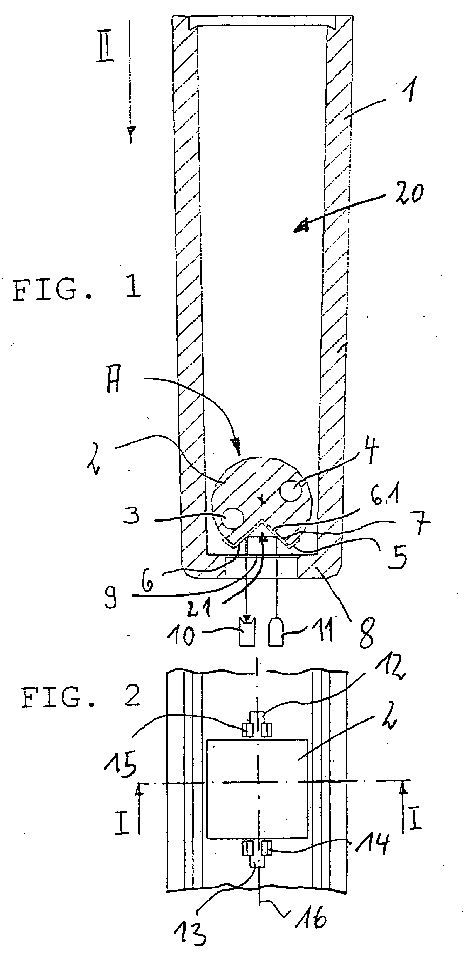

Nachfolgend wird eine erste Ausführungsform des erfindungsgemäßen Systems und des erfindungsgemäßen Behälters anhand den Figuren 1 bis 8 ausführlich beschrieben und erläutert.

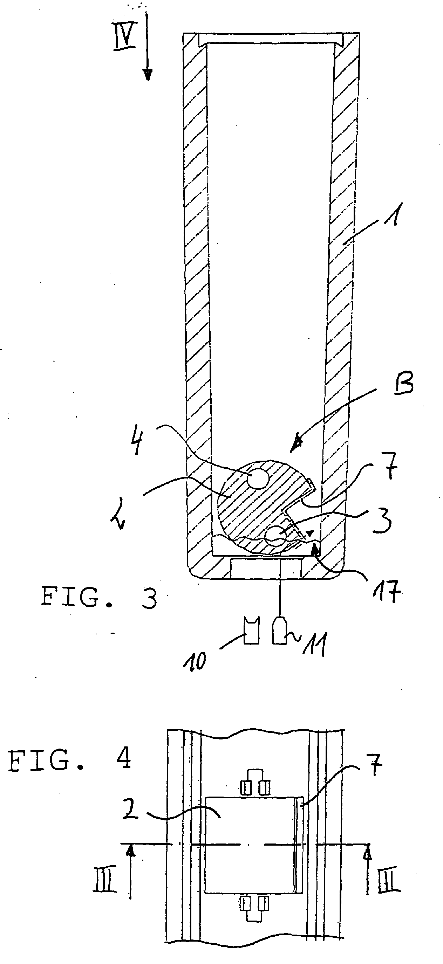

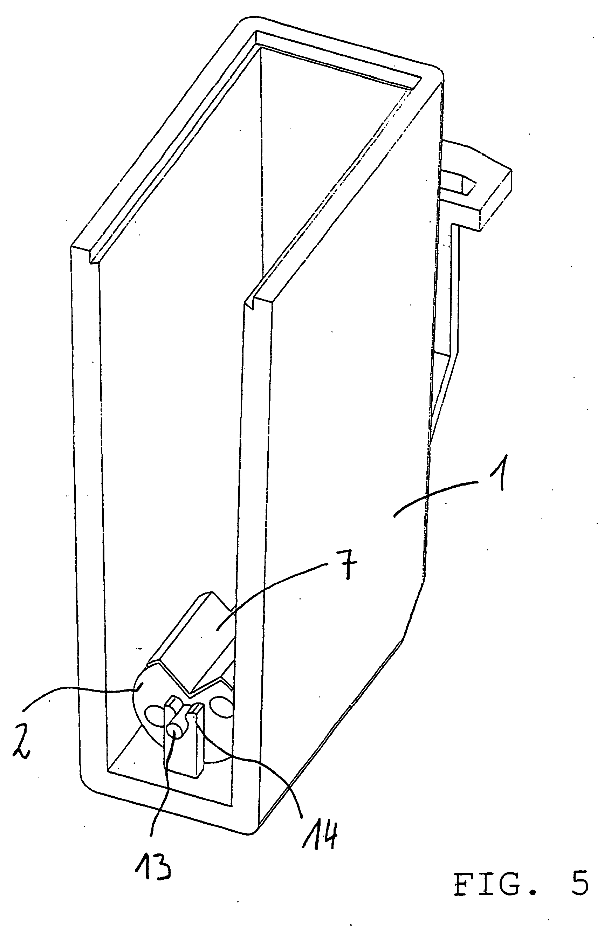

Die Figuren 1 und 2 zeigen die erste Ausführungsform der vorliegenden Erfindung in einem Zustand A, wenn ein starrer Behälter 1 leer ist. Die Figuren 3 und 4 zeigen die erste Ausführungsform der erfindungsgemäßen Vorrichtung in einem Zustand B, wenn der Flüssigkeitspegel bzw. Flüssigkeitsstand im Behälter 1 niedrig bzw. sehr niedrig ist. Die Figuren 5 bis 8 zeigen die erste Ausführungsform der erfindungsgemäßen Vorrichtung in einem Zustand C, wenn der Flüssigkeitspegel im Behälter 1 hoch ist bzw. wenn der Behälter 1 voll ist.

Die erste Ausführungsform des erfindungsgemäßen Systems gemäß den Figuren 1 bis 8 umfasst im wesentlichen einen lichtundurchlässigen Reflexionskörper 2 in der Form eines Zylinders bzw. einer Walze, eine Lichtquelle 11, die einen Lichtstrahl in Richtung des Reflexionskörpers 2 emittiert, und einen Lichtempfänger 10 bzw. Lichtdetektor, der vom Reflexionskörper 2 zurück gestrahltes bzw. reflektiertes Licht empfangt. Der Reflexionskörper 2 ist in einer Kammer 20 eines Behälters 1 angeordnet, die zur Aufnahme von Flüssigkeit, z.B. von Tinte im Falle einer Tintenpatrone, dient.

Der Reflexionskörper 2 ist in der Nähe bzw. am Boden 8 des Behälters 1 angebracht. Im Boden 8 ist ein transparentes Fenster 9 mit geringer Stärke oder Dicke vorgesehen, durch das der Lichtstrahl von der Lichtquelle 11 in die Kammer 20 des Behälters 1 eintritt und durch das reflektiertes Licht vom Reflexionskörper 2 aus der Flüssigkeitskammer 20 des Behälters 1 derart austreten kann, dass es auf den Lichtdetektor 10 fällt.

Der Reflexionskörper 2 ist in der Form einer Zylinders bzw. einer Walze ausgebildet, der eine Umfangsfläche und zwei sich gegenüberliegende Endflächen aufweist. Am Umfang des Zylinders bzw. Reflexionskörpers 2 ist eine Vertiefung 21 ausgebildet. Der Reflexionskörper 2 hat weiterhin zwei Hohlräume 3 und 4 bzw. Kammern, die sich durchgängig zwischen den beiden Endflächen des Reflexionskörpers 2 erstrecken und parallel zueinander und zu einer Mittenachse 16 des Reflexionskörpers 2 sind. Die beiden Hohlräume 3 und 4 haben einen zylindrischen Rauminhalt und können, da sie an den Endflächen geöffnet sind, Flüssigkeit aufnehmen.

In der Vertiefung 21 des Reflexionskörpers 2 ist eine reflektierende Einlage 7, z.B. aus Metall, angeordnet und, beispielsweise durch Einkleben, befestigt, die eine höhere Dichte als der sonstige Zylinder hat. Die Vertiefung 21 hat zwei senkrecht sich schneidende Seitenflächen, auf denen die Einlage 7 aufsitzt. Die entsprechenden Seitenwände 6 und 6.1 der Einlage 7 sind an ihren Endbereichen am Umfang des Zylinders jeweils mit einem Fortsatz 5 versehen, der auf dem Umfang des Reflexionskörpers 2 aufsitzt. Die Vertiefung 21 und die Einlage 7 erstrecken sich durchgehend zwischen den beiden Endflächen des Zylinders bzw. Reflexionskörpers 2. Der Umfang des Reflexionskörpers 2 ist im Bereich außerhalb der Vertiefung 21 derart gephast, dass sein Umriß im Querschnitt, wie in der Figur 1 zu sehen ist, ein regelmäßiges Polyeder darstellt. An den beiden Endflächen hat der Reflexionskörper 2 jeweils einen Lagerzapfen 12 bzw. 13, mit denen der Reflexionskörper 2 drehbar um seine Mittenachse 16 in entsprechenden Lagersitzen 15 bzw. 14 gelagert ist. Die Lagersitze 15 bzw. 14 befinden sich an den freien Enden von Lagerstützen, die am Boden 8 in der Flüssigkeitskammer 20 des Behälters 1 befestigt sind. Die Lagersitze 15 und 14 sind als Schnappsitze für die Lagerzapfen 12 und 13 des Reflexionskörper 2 ausgebildet, halten den Reflexionskörper 2 fest, wenn die Lagerzapfen 12 und 13 in die Lagersitze 15 bzw. 14 eingerastet sind, und stellen die Drehbarkeit des Reflexionskörpers 2 um seine Mittenachse 16 sicher.

In der Figur 8 ist die gegenseitige Anordnung der Hohlräume 4 und 3 zu der Vertiefung 21 bzw. der Einlage 7 und der Mittenachse 16 des Reflexionskörpers 2 verdeutlicht. Geht man von einer fiktiven Ebene aus, in der die Mittenachse 16 des Reflexionskörpers 2 liegt und die den Reflexionskörper 2 in eine erste Hälfte und eine zweite Hälfte unterteilt, ist die Vertiefung 21 und die Einlage 7 und auch der Hohlraum 3 in einer ersten Hälfte des Reflexionskörpers 2 ausgebildet, während der Hohlraum 4 in der anderen bzw. zweiten Hälfte des durch die fiktive Ebene unterteilten Reflexionskörpers 2 vorgesehen ist. Genauer können die Hohlräume 3 und 4 derart ausgebildet sein, dass ihre Mittenachsen zusammen mit der Mittenachse 16 des Reflexionskörpers 2 in einer weiteren angenommenen Ebene liegen, wobei diese weitere fiktive Ebene schiefwinklig zur ersten Ebene ist und die erste Ebene in der Mittenachse 16 des Reflexionskörpers schneidet. Der Abstand der Mittenachse des Hohlraums 4 zur Mittenachse 16 ist gleich dem Abstand der Mittenachse des Hohlraums 3 zur Mittenachse 16 des Reflexionskörpers 2.

Als Lichtquelle 11 des erfindungsgemäßen Systems kann z.B. eine Lumineszenzdiode verwendet werden. Als Lichtempfänger 10 bzw. Lichtdetektor kann ein Photodetektor, z. B. eine Photodiode, eine Pin-Diode oder z.B. eine Lawinenphotodiode verwendet werden. Die Lichtquelle 11 bzw. der Lichtsender und der Lichtdetektor 10 können in einer Einheit integriert sein. Der Ausgang der opto-elektronischen Lichtdetektors 10 ist mit einer Signalformungs- und Auswerteelektrode (nicht gezeigt) verbunden, die das Signal vom Lichtdetektor 10 verarbeitet und zur Anzeige bringt.

Vor Befüllen des Behälters 1 mit einer Flüssigkeit, z.B. Tinte im Fall einer Tintenpatrone für einen Tintenstrahldrucker oder ähnliches, befindet sich der Reflexionskörper 2 in der stabilen Position A, die in den Figuren 1 und 2 verdeutlicht ist. In der Position A, also bei leerem bzw. unbefüllten Behälter 1, ist der im Behälter 1 gelagerte Reflexionskörper 2 in einer Position oder Lage, in der die reflektierende Einlage 7 innerhalb der Vertiefung 21 genau gegenüber dem Fenster 9 des Bodens 8 des Behälters 1 ausgerichtet ist. Der Lichtstrahl von der Lichtquelle 11 fällt dann nach Durchtritt durch das Fenster 9 auf die Fläche 6.1 der Einlage 7, wird um 90° an dieser Fläche 6.1 zur Fläche 6 der Einlage 7 umgelenkt und wiederum von der Fläche 6 um 90° umgelenkt und in Richtung zum Fenster 9 und damit zum Lichtdetektor 10 reflektiert. Die Einlage 7 in der Vertiefung 21 wirkt somit in der Position A bei leerem Behälter 1 als Umlenkspiegel bzw. Umlenkreflektor, wobei der von der Lichtquelle emittierte Lichtstrahl und der vom Reflexionskörper 2 reflektierte Lichtstrahl außerhalb des Behälters 1 zueinander parallel sind.

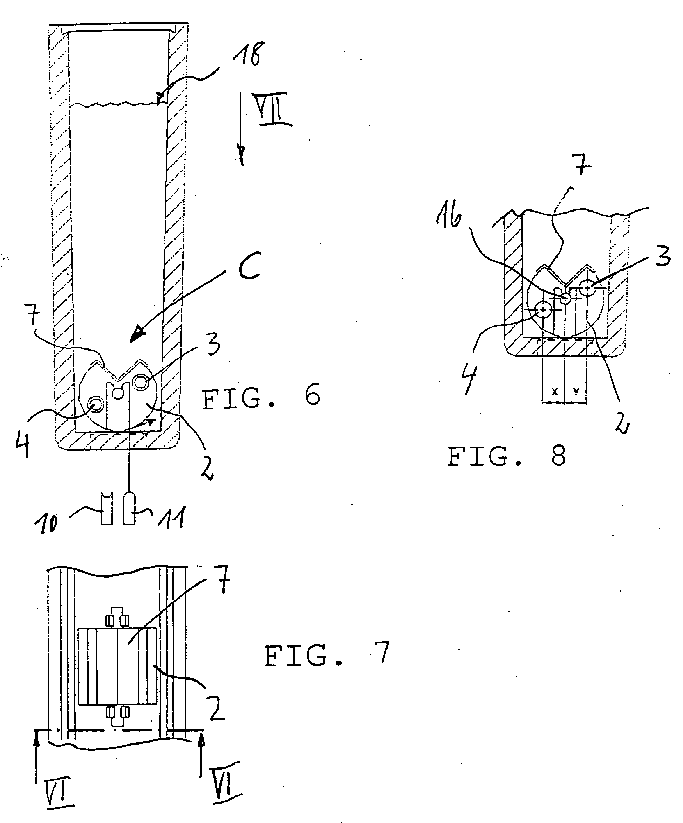

Mit zunehmendem Flüssigkeitspegel in der Flüssigkeitskammer 20 des Behälters 1 beginnt der Reflexionskörper 2 sich aus der Position A der Figur 1 herauszudrehen und nimmt z.B. die Position B der Figuren 3 und 4 ein. Der Grund für die Drehbewegung des Reflexionskörpers 2 ist darin zu sehen, dass der Reflexionskörper 2 insgesamt als Schwimmer mit einer resultierenden Auftriebskraft ausgelegt ist. Die Auslegung des Reflexionskörpers 2 als Schwimmer alleine führt jedoch noch nicht unmittelbar zu einer Drehbewegung des Reflexionskörpers 2 bei Änderung des Flüssigkeitstands in der Flüssigkeitskammer 20 des Behälters 1. Die Drehbewegung aufgrund des angreifenden Auftriebs des Reflexionskörpers 2 wird erst durch eine ungleiche bzw. unsymmetrische Massenverteilung des Reflexionskörpers 2 erzeugt. Diese ungleiche Massenverteilung kann z.B. durch eine zur Mittenachse 16 des Reflexionskörpers 2 unsymmetrische Materialanhäufung erreicht werden. In der ersten Ausführungsform wird diese unsymmetrische bzw. ungleiche Massenverteilung durch die Vertiefung 21, die Einlage 7 in der Vertiefung 21 und die beiden Hohlräume 3 und 4 erreicht, die derart zusammen wirken, dass die resultierende, am Reflexionskörper 2 angreifende Auftriebskraft die Mittenachse 16 nicht mehr schneidet und somit ein Drehmoment erzeugt wird, das den Reflexionskörper 2 aus der Position A (vgl. Figur 1) in die Position B (vgl. Figur 3) und weiter in die Position C (vgl. Figur 6), die einen hohen Füllstand bzw. einen vollen Behälter 1 zeigt, dreht. In der Position C mit z.B. dem Füllstand 18 ist der Reflexionskörper 2 dann wieder in einer stabilen Lage. Beim Drehen aus der Position A, in der wie gesagt die Vertiefung 21 mit Einlage 7 gegenüber dem Fenster 9 ausgerichtet ist, d.h. in Richtung des Lichtdetektors 10, in die Position C, in der die Vertiefung 21 mit der Einlage 7 genau in der gegenüberliegenden Lage zur Position A ist, also vom Boden des Behälters 1 genau wegweist und nicht mehr im Einfallsbereich des Lichtstrahls von der Lichtquelle 11 ist, wird der Lichtstrahl von der Lichtquelle 11 am gephasten Umfang des Reflexionskörpers 2 derart reflektiert, dass er nicht mehr den Lichtdetektor 10 erreicht. Am Ausgang des Lichtdetektors 10 steht damit kein Signal mehr an, was gleich bedeutend mit der Aussage Behälter "voll" ist. Der Reflexionskörper 2 bewegt sich damit in Abhängigkeit vom Füllstand der Flüssigkeit in der Flüssigkeitskammer 20 des Behälters 1 und der Lichtdetektor 10 empfängt in Abhängigkeit von dieser Bewegung bzw. Drehbewegung des Reflexionskörpers 2 eine unterschiedliche Lichtmenge.

Bei zunehmender Entleerung, also bei absinkendem Flüssigkeitspegel im Behälter 1, bewegt sich der Reflexionskörper 2 aus der Position C in die Position A, wenn der Pegelstand der Flüssigkeit auf null zurückgeht. Die Bewegung aus der Position C für "vollen" Behälter in die Position A für "leeren" Behälter wird durch die besagte Ungleichverteilung der Massen, also durch das Ungleichgewicht, erzeugt. Dieses Ungleichgewicht führt zu einer resultierenden Kraft bzw. Gewichtskraft, die die Mittenachse 16 des Zylinders 2 nicht mehr schneidet und dadurch ein am Reflexionskörper 2 angreifendes Drehmoment erzeugt, das die Drehbewegung des Reflexionskörpers 2 aus der Position C in die Position A bewirkt. Die Vertiefung 21 mit Einlage 7 gelangt dann wieder in die Position A, wo die Einlage 7 als Umlenkspiegel für den Lichtstrahl für die Lichtquelle 11 zu dem Lichtdetektor 10 dient. Der Lichtdetektor 10 gibt dann ein elektrisches Signal aus, das den Leerstand des Behälters 1 anzeigt.

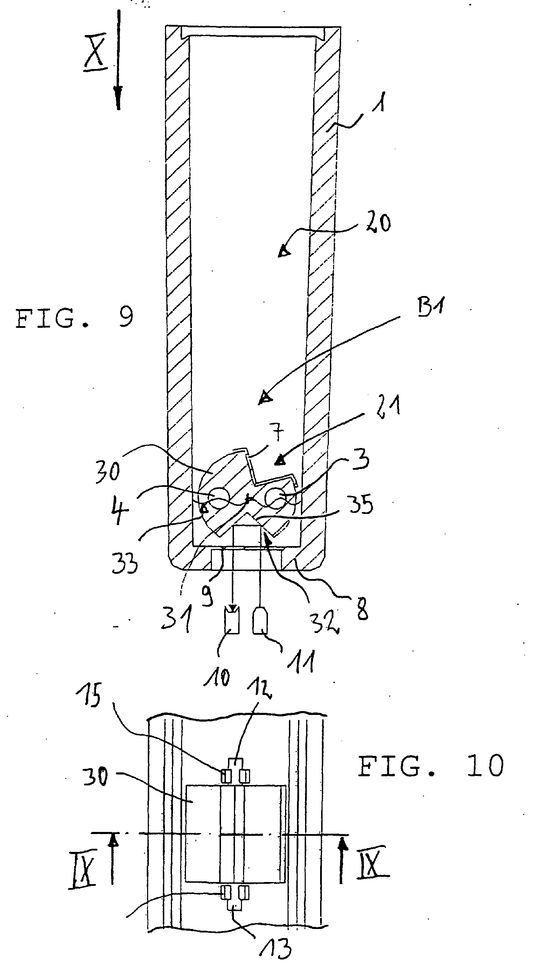

Nachfolgend wird eine zweite Ausführungsform des erfindungsgemäßen Systems anhand der Figuren 9 und 10 beschrieben und erläutert. Die zweite Ausführungsform des erfindungsgemäßen Systems weist einen lichtundurchlässigen Reflexionskörper 30 auf. Weiterhin hat die zweite Ausführungsform wie die erste Ausführungsform der Erfindung gemäß Figur 1 eine Lichtquelle 11, die einen Lichtstrahl in Richtung des Reflexionskörpers 30 emittiert, und einen Lichtdetektor 10, der vom Reflexionskörper 30 zurück gestrahltes Licht empfängt. Der Reflexionskörper 30 ist wiederum wie in der ersten Ausführungsform in der Kammer 20 eines Behälters 1 angeordnet, der zur Aufnahme von Flüssigkeit, z.B. von Tinte, dient. Der Reflexionskörper 30 ist in der Nähe bzw. am Boden 8 des Behälters 1 angebracht. Im Boden 8 ist ein transparentes Fenster 9 vorgesehen, durch das der Lichtstrahl von der Lichtquelle 11 in die Kammer 20 des Behälters 1 eintritt und durch das reflektiertes Licht vom Reflexionskörper 30 aus der Flüssigkeitskammer 20 des Behälters 1 derart austreten kann, dass es auf den Lichtdetektor 10 fällt.

Der Reflexionskörper 30 ist als Schwimmer ausgelegt und in der Form auf der Basis eines Zylinders ausgebildet, der eine Umfangsfläche und zwei sich gegenüberliegende Endflächen aufweist. Der Zylinder bzw. Reflexionskörpers 30 hat eine Vertiefung 21 mit Einlage 7 und zwei Hohlräume 3 und 4 bzw. Kammern, wobei die Elemente 3, 4, 7 und 21 wie in der ersten Ausführungsform gemäß Fig. 1 ausgebildet sind und auch die gleichen Funktionen und Wirkungen haben.

Im Unterschied zur ersten Ausführungsform hat der Reflexionskörper 30 an seinem Umfang jedoch eine weitere Vertiefung 32, die der Vertiefung 21 am Umfang in etwa gegenüberliegend ausgebildet ist. Die beiden Innenflächen 35 der Vertiefung 32 erstrecken sich orthogonal zueinander zwischen den beiden Endflächen des Reflexionskörpers 30. Ansosnsten ist die Umfangsfläche des Reflexionskörpers 30 im Bereich außerhalb der Vertiefungen 21 und 32 wie bei der ersten Ausführungsform gephast. An den beiden Endflächen hat der Reflexionskörper 30 wiederum die Lagerzapfen 12 bzw. 13, mit denen der Reflexionskörper 30 drehbar um seine Mittenachse 31 in entsprechenden Lagersitzen 15 bzw. 14 gelagert ist. Die Lagersitze 15 bzw. 14 befinden sich wie bei der ersten Ausführungsform an den freien Enden von Lagerstützen. Die Elemente 12 bis 16 der zweiten Ausführungsform haben den gleichen Aufbau und die gleichen Eigenschaften wie in der ersten Ausführungsform. Insgesamt haben die Teil und Einrichtungen der zweiten Ausführungsform mit den gleichen Bezugszeichen der ersten Ausführungsform gemäß den Figuren 1 bis 8 auch den gleichen Aufbau und die gleiche Wirkungsweise wie in der ersten Ausführungsform. Diesbezüglich wird deshalb auf die Erläuterungen zur ersten Ausführungsform verwiesen. Insbesondere traffen die Erläuterungen bezüglich den Positionen A, B und C der ersten Ausführungsform auch für die Drehbewegung und Funktionsweise der zweiten Ausführungsform der Erfindung zu.

Im Unterschied zur ersten Ausführungsform hat jedoch die zweite Ausführungsform zusätzlich die Vertiefung 32 deren Wirkungsweise nachfolgend anhand der Position B1 der Figur 9 erläutert wird.

In der Position B1 ist der Füllstand 33 der Flüssigkeit im Behälter 1 relativ niedrig also zwischen dem Füllstand "voll" der Position C und dem Füllstand "leer" der Position A. Der Füllstand 33 der Position B1 kann z.B. als "fast leer" bezeichnet werden. In der stabilen Position B1 sind die Mittenachsen der beiden Hohlräume 3 und 4 und die Mittenachse 31 des Reflexionskörpers 30 in einer gemeinsamen Ebene, die sich parallel zum Boden 8 des Behälters 1 erstreckt. Die Vertiefung 32 des Reflexionskörpers 30 ist genau gegenüberliegend zum Fenster 9 des Behälters 1 in der gezeigten Position B 1 ausgerichtet. Die beiden Innenflächen 35 der Vertiefung 32 dienen dann zur Umlenkung des Lichts von der Lichtquelle 11 zu dem Lichtdetektor 10, der ausgelöst durch den Lichtempfang ein elektrisches Signal ausgibt, das die Bedeutung Füllstand "fast leer" hat.

Die dem Lichtdetektor 10 nachgeschaltete Auswerteelektronik (nicht gezeigt) kann zwar alleine aufgrund der Signale vom Lichtdetektor 10 nicht unterscheiden, ob die Position A mit Füllstand "leer" oder die Position B1 mit Füllstand "fast leer" vorliegt. Sie kann jedoch die Unterscheidung aufgrund der zeitlichen Abfolge der Signale entsprechend der Drehbewegung des Reflexionskörpers 30 und damit der Füllstandsänderung ausgehend von der Position C "voll" mit keinem Signal am Ausgang des Lichtdetektors 10 über die Position B1 "fast leer" mit einem Signal am Ausgang des Lichtdetektors in die Position A "leer" mit einem weitere Signal am Ausgang des Lichtdetektors ausführen.

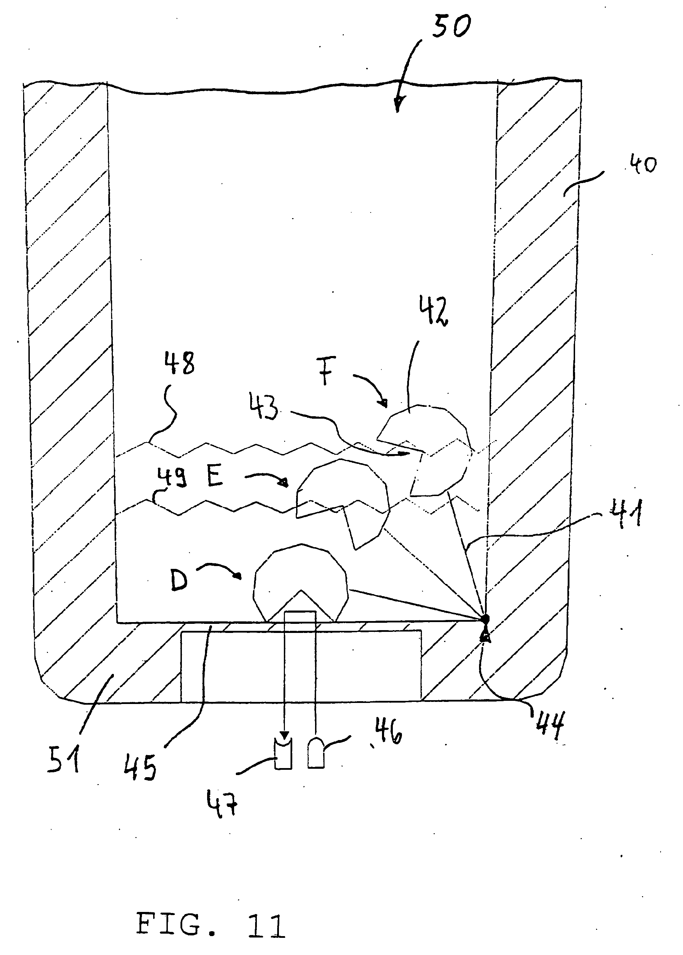

In der Figur 11 ist eine dritte Ausführungsform der Erfindung gezeigt, die nachfolgend beschrieben und erläutert wird. Das erfindungsgemäße System hat einen Behälter 40 mit einem Boden 51, in dem ein transparentes, lichtdurchlässiges Fenster 45 vorgesehen ist, einen Reflexionskörper 42 in der Kammer 50 des Behälters 40, eine Lichtquelle 46, die Licht in die Kammer 50 emittiert, und einen Lichtdetektor 47, der Licht aus der Kammer 50 detektiert.

Der Reflexionskörper 42 ist lichtundurchlässig, ist als Schwimmer ausgelegt und hat die Form eines Zylinders mit einer Umfangsfläche und zwei Endflächen. An der Umfangsfläche ist der Reflexionskörper 42 mit einer Vertiefung 43 mit zwei Innenflächen versehen, die sich orthogonal zueinander erstrecken und einen Reflektorabschnitt bzw. einen Umlenkspiegel des Reflexionskörpers 42 ausbilden. Die Innenflächen der Vertiefung 43 sind gleichgroß. Die Vertiefung 43 erstreckt sich zwischen den Endflächen des Reflexionskörpers 42.

Der Reflexionskörper 42 ist mittels einer starren Aufhängung 41 mit einem Gelenk 44 am Boden 51 des Behälters 40 verbunden. Das Gelenk 44 und die Aufhängung 41 sind in der Figur 11 schematisch gezeigt. Der Reflexionskörper 42 bewegt sich somit auf einer Kreisbahn um eine Gelenkachse des Gelenks 44, wenn sich der Füllstand der Flüssigkeit innerhalb des Behälters 40 ändert.

Wird aus dem zuvor vollen Behälter 40 Flüssigkeit entnommen, sinkt der Flüssig, keitspegel in der Flüssigkeitskammer 50 des Behälters 40 z.B. auf den Flüssigkeitsstand 48 ab und der Reflexionskörper 42 befindet sich dann in der Position F. Das Licht, das von der Lichtquelle 46 in den Behälter 40 eingestrahlt wird, wird dann vom Reflexionskörper 42 nicht reflektiert sondern vielmehr diffus in der Flüssigkeitskammer 50 des Behälters 40 derart verteilt und absorbiert, dass es den Lichtdetektor 47 nicht erreicht. Am Ausgang des Lichtdetektors wird dann kein Signal erzeugt, was gleichbedeutend mit einem Füllstand "voll" ist.

Wird mehr und mehr Flüssigkeit dem Behälter 40 entnommen, sinkt der Flüssigkeitspegel immer weiter ab und gelangt z.B. über den Pegel 49, bei dem der Reflexionskörper 42 in der Position E ist, in den Null-Pegel, bei dem der Behälter 40 geleert ist und der Reflexionskörper 42 auf dem Boden 51 des Behälters 40 in der Position D aufliegt. Die Innenflächen der Vertiefung 43 lenken in der Position D das Licht von der Lichtquelle 46 um und reflektieren es zurück auf den Photodetektor 47, der an seinem Ausgang ein elektrisches Signal erzeugt, das einen Füllstand "leer" anzeigt.

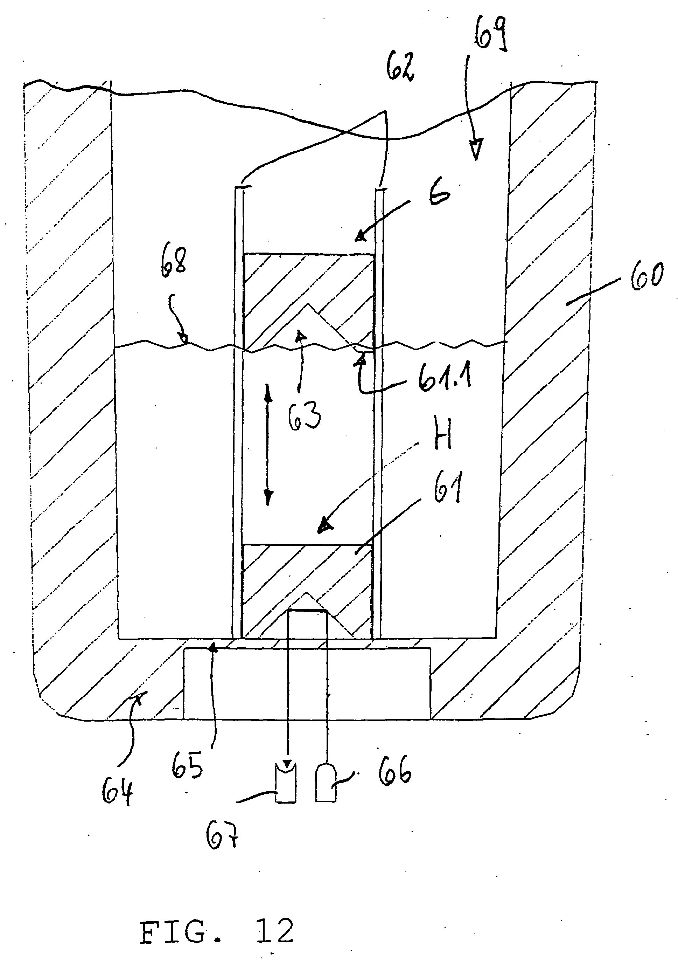

In der Figur 12 ist eine vierte Ausführungsform der Erfindung gezeigt, die nachfolgend beschrieben und erläutert wird. Das erfindungsgemäße System hat einen erfindungsgemäßen Behälter 60 mit einem Boden 64, in dem ein transparentes, lichtdurchlässiges Fenster 65 vorgesehen ist, einen Reflexionskörper 61 in der Flüssigkeitskammer 69 des Behälters 60, eine Lichtquelle 66, die Licht in die Kammer 69 des Behälters 60 emittiert, und einen Lichtdetektor 67, der Licht aus der Kammer 69 bzw. von dem Behälter 60 detektiert.

Der Reflexionskörper 61 ist lichtundurchlässig, ist als Schwimmer ausgelegt und hat die Form eines Quaders mit einer Unterseite 61.1, die zum Boden 64 des Behälters 60 weist. An der Unterseite hat der Reflexionskörper 61 einer Vertiefung 63 mit zwei Innenflächen bzw. Seitenflächen, die sich v-förmig und orthogonal zueinander erstrecken und einen Reflektorabschnitt bzw. einen Umlenkspiegel des Reflexionskörpers 61 ausbilden. Die Seitenflächen der Vertiefung 63 sind gleichgroß. Die Vertiefung 63 erstreckt sich an der Unterseite des Reflexionskörpers 61 durchgehend.

Der Reflexionskörper 61 ist in einer Führung 62 bei seiner Bewegung mit dem Flüssigkeitspegel geführt. Die Führung 62 kann z.B. als Feder-Nut-System realisiert sein, das an zwei zueinander gegenüberliegenden Außenseiten des Reflexionskörpers 61 angeordnet ist. Der Reflexionskörper 61 bewegt sich linear mit dem Flüssigkeitsstand mit, wobei die Vertiefung 63 immer zum Fenster 65 des Behälters 60 weist und die Unterseite 61.1 des Reflexionskörpers 61 parallel zum ebenen Fenster 65 ist.

Wird aus dem zuvor vollen Behälter 60 Flüssigkeit entnommen, sinkt der Flüssigkeitspegel in der Flüssigkeitskammer 69 des Behälters 60 z.B. auf den flüssigkeitsstand 68 ab und der Reflexionskörper 61 befindet sich dann in der Position G. Das Licht, das von der Lichtquelle 66 in den Behälter 60 lotrecht zum transparenten Fenster 65 eingestrahlt wird, wird dann an den Innenflächen des Reflexionskörper 61 umgelenkt und zum Fenster 65 zurückgeworfen. Auf dem Weg zum Reflexionskörper 61 und wieder zurück zum Fenster 65, wird der Lichtstrahl jedoch in der Flüssigkeit so stark gedämpft, dass nur noch ein Bruchteil der von der Lichtquelle erzeugten Lichtintensität den Lichtdetektor 67 nach der Umlenkung erreicht. Die vom Lichtdetektor 67 detektierte Lichtmenge ist z.B. so gering, dass sie unter einer Empfindlichkeitsschwelle des Lichtdetektors 67 oder unter einer vorgegebenen Detektionsschwelle des Lichtdetektors 67 liegt. Der Lichtdetektor 67 gibt deshalb kein Signal aus, was gleichbedeutend mit Füllstand "voll" ist.

Wird mehr und mehr Flüssigkeit dem Behälter 60 entnommen, sinkt der Flüssigkeitspegel immer weiter ab, bis der Reflexionskörper 61 auf dem Boden 64 in der Flüssigkeitskammer 69 des Behälters 60 aufliegt. Der Reflexionskörper 61 ist dann in der gezeigten Position H und ein Null-Pegel der Flüssigkeit ist gegeben, bei dem der Behälter 60 geleert ist. Die orthogonalen Seitenflächen der Vertiefung 63 lenken dann in der Position D das Licht von der Lichtquelle 66 um und reflektieren es zurück auf den Photodetektor 67. Die empfangene Lichtintensität liegt hier über der Detektionsschwelle des Lichtdetektors 67, der an seinem Ausgang folglich ein elektrisches Signal erzeugt, das einen Füllstand "leer" anzeigt.

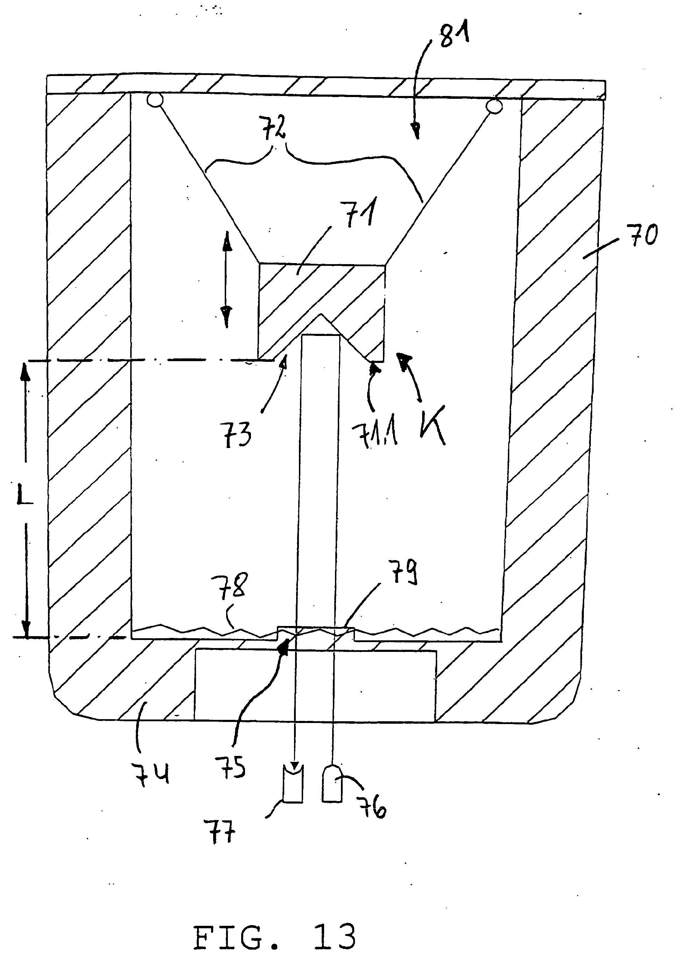

In der Figur 13 ist eine fünfte Ausführungsform der Erfindung gezeigt, die nachfolgend beschrieben und erläutert wird. Das erfindungsgemäße System hat einen erfindungsgemäßen Behälter 70 mit einem Boden 74, in dem ein transparentes, lichtdurchlässiges Fenster 75 mit einer mittigen Erhebung bzw. einem mittig angeordneten Vorsprung 79, der in die Kammer 81 des Behälters 70 hinein vorsteht, einen Reflexionskörper 71 in der Kammer 81 des Behälters 70, eine Lichtquelle 76, die Licht in die Kammer 81 des Behälters 70 emittiert, und einen Lichtdetektor 77, der Licht aus der Kammer 81 bzw. von dem Behälter 70 detektiert.

Der Reflexionskörper 71 ist lichtundurchlässig, ist als Schwimmer ausgelegt und hat die Form eines Quaders mit einer Unterseite 71.1, die zum Boden 74 des Behälters 70 weist. An der Unterseite 71.1 hat der Reflexionskörper 71 einer Vertiefung 73 mit zwei Innenflächen bzw. Seitenflächen, die sich v-förmig und orthogonal zueinander erstrecken und einen Reflektorabschnitt oder Umlenkreflektor bzw. einen Umlenkspiegel des Reflexionskörpers 71 ausbilden. Die Seitenflächen der Vertiefung 73 sind gleich groß. Die Vertiefung 73 erstreckt sich an der Unterseite 71.1 des Reflexionskörpers 71 durchgehend.

Der Reflexionskörper 71 ist an einer Aufhängung 72 befestigt, die wiederum im oberen Bereich des Behälters 70, z.B. an dessen Deckel, wie in der Figur 13 gezeigt, oder an den Seitenwänden angebracht sein kann. Die Aufhängung 72 kann flexibel ausgelegt sein, damit sich der Reflexionskörper 71 entlang einer geraden Strecke, die durch die Aufhängung 72 vorgegeben bzw. begrenzt ist, mit dem Flüssigkeitspegel mitbewegen kann. Die Aufhängung 72 kann z.B. aus einem oder mehreren flexiblen Bändern oder Stäben zusammengesetzt sein. Die Vertiefung 73 des Reflexionskörpers 71 weist immer zum Fenster 75 des Behälters 70 hin und die Unterseite 71.1 des Reflexionskörpers 71 ist parallel zu einem Fenster 75.

Wird aus dem zuvor vollen Behälter 70 Flüssigkeit entnommen, sinkt der flüssigkeitspegel in der Flüssigkeitskammer 81 des Behälters 70 immer weiter ab, bis der Reflexionskörper 71 in der Flüssigkeitskammer 81 des Behälters 70 frei hängt, wie z.B. mit der Position K des Reflexionskörpers 71 in der Figur 13 gezeigt ist. In der Position K ist ein Abstand L zwischen der Unterseite 71.1 des Reflexionskörpers 71 und dem Boden 74 des Behälters 70 gegeben. Der Abstand L kann dabei derart vorgegeben sein, dass eine sichere Unterscheidung zwischen dem Flüssigkeitspegel "voll" und dem Flüssigkeitspegel "leer" ermöglicht wird.

Das Licht, das von der Lichtquelle 76 in den Behälter 70 lotrecht zum transparenten Fenster 75 eingestrahlt wird, wird dann an den Innenflächen des Reflexionskörpers 71 umgelenkt und zum Fenster 75 zurückgeworfen, wobei die Lichtstrahlen, wie aus der Figur 13 ersichtlich ist, parallel zueinander mit Abstand verlaufen. Solange noch ein nennenswerter Flüssigkeitspegel im Behälter 70 gegeben ist, wird das Licht auf dem Weg zum Reflexionskörper 71 und wieder zurück zum Fenster 75 in der Flüssigkeit so gedämpft oder absorbiert bzw. gestreut, dass nur noch ein Bruchteil der von der Lichtquelle erzeugten Lichtintensität den Lichtdetektor 77 nach der Umlenkung am Reflexionskörper 71 erreicht. Die von dem Lichtdetektor 77 detektierte Lichtintensität ist dann z.B. so gering, dass sie unter einer Empfindlichkeitsschwelle des Lichtdetektors 77 oder unter einer vorgegebenen Detektionsschwelle des Lichtdetektors 77 liegt. Der Lichtdetektor 77 gibt deshalb kein Signal aus, was gleichbedeutend mit Füllstand "voll" ist.

Wird mehr und mehr Flüssigkeit dem Behälter 70 entnommen, sinkt der Flüssigkeitspegel immer weiter ab, bis der Flüssigkeitspegel unter das Niveau des Vorsprungs 79 absinkt, wie in der Figur 13 gezeigt ist. Der Reflexionskörper 71 ist hier in der gezeigten Position K und ein Null-Pegel der Flüssigkeit ist gegeben, bei dem der Behälter 70 im wesentlichen geleert ist. Die orthogonalen Seitenflächen der Vertiefung 73 lenken dann in der Position K des Reflexionskörpers 71 das Licht von der Lichtquelle 76 um und reflektieren es zurück auf den Photodetektor 77. Da der Lichtstrahl innerhalb des Behälters 70 nun z.B. Luft auf seinem Weg durchquert und damit eine erheblich geringere Dämpfung des Lichtstrahls gegeben ist, liegt die empfangene Lichtintensität bzw. Lichtmenge hier über der Detektionsschwelle des Lichtdetektors 77, der an seinem Ausgang folglich ein elektrisches Signal erzeugt, das einen Füllstand "leer" anzeigt. Durch den ebenen bzw. stumpfen Vorsprung 79 wird vermieden, dass ein letzter Restfüllstand das Ergebnis der Detektion verfälschen kann, da die restliche Flüssigkeit von der Oberfläche des Vorsprungs 79 in die benachbarten vertieften bzw. tieferliegenden Bereiche ganz abgeflossen ist.

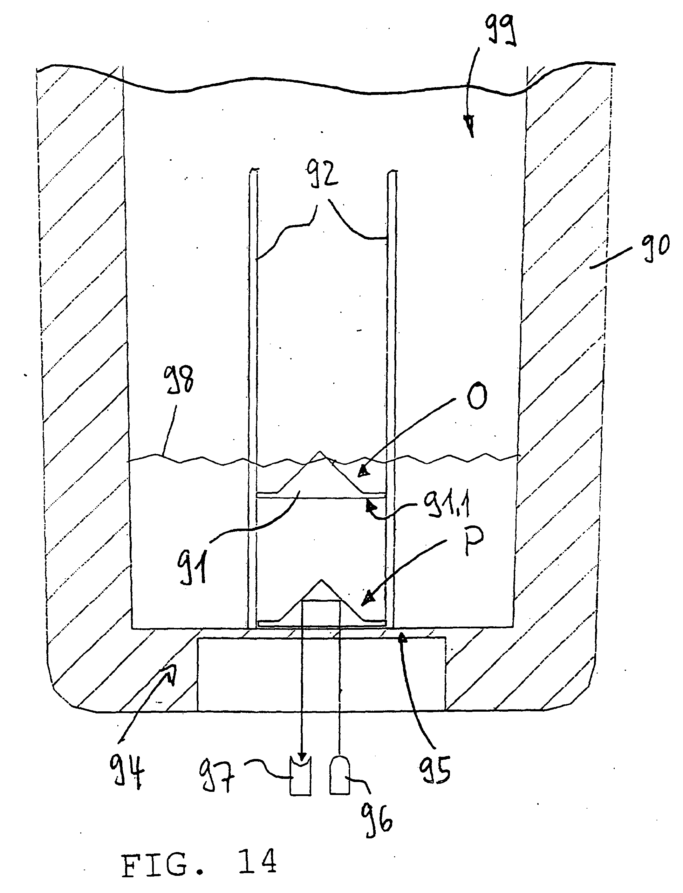

In der Figur 14 ist eine sechste Ausführungsform der Erfindung gezeigt, die nachfolgend beschrieben und erläutert wird. Das erfindungsgemäße System hat einen erfindungsgemäßen Behälter 90 mit einem Boden 94, in dem ein ebenes, transparentes, lichtdurchlässiges Fenster 95 vorgesehen ist, einen Reflexionskörper 91 im Innern 99 bzw. in einer Flüssigkeitskammer 99 des Behälters 90, eine Lichtquelle 96, die Licht in die Kammer 99 des Behälters 90 emittiert, und einen Lichtdetektor 97, der Licht aus der Kammer 99 detektiert.

Der Reflexionskörper 91 besteht aus einem transparenten Material, ist als Schwimmer ausgelegt und hat die Form eines Umlenkprismas mit einer ebenen Unterseite 91.1, die zum Boden 94 des Behälters 90 weist, und einer Spitze, die vom Behälterboden 94 bzw. dem transparenten Fenster 95 wegweist.

Der Reflexionskörper 91 ist in einer Führung 92 bei seiner Bewegung mit dem Flüssigkeitspegel geführt. Die Führung 92 kann z.B. als Feder-Nut-System realisiert sein, das an zwei zueinander gegenüberliegenden Außenseiten des Reflexionskörpers 91 angeordnet ist. Der Reflexionskörper 91 bewegt sich linear oder geradlinig mit dem Flüssigkeitsstand mit. Der Reflexionskörper 91 ist von seinem Volumen bzw. seiner Materialdichte her derart ausgelegt, dass er im wesentlichen in der Flüssigkeit, z.B. der Tinte eines Tintenstrahldruckers, eingetaucht ist und die beiden Umlenkpunkte bzw. -orte des Lichtstrahls von der Lichtquelle 96 an der Oberfläche des Umlenkprismas bzw. des Reflexionskörpers 91 unter dem jeweiligen Flüssigkeitspegel liegen (vgl. Position O in der Figur 14).

Der Brechungsindex der Flüssigkeit und des Materials des Reflexionskörpers 91 sind im wesentlichen gleich bzw. aneinander angepasst und, wenn es sich um Tinte handelt, im wesentlichen gleich dem Brechungsindex von Wasser. Die Luft im Behälter 90 hat dagegen einen erheblich geringeren Brechungsindex, nämlich in Näherung den Brechungsindex von Vakuum.

Wird aus dem zuvor vollen Behälter 90 Flüssigkeit entnommen, sinkt der Flüssigkeitspegel in der Flüssigkeitskammer 99 des Behälters 90 z.B. auf den Flüssigkeitstand 98 ab und der Reflexionskörper 91 befindet sich dann in der Position O, die in der Figur 14 gezeigt ist. Das Licht, das von der Lichtquelle 96 in den Behälter 90 lotrecht zum transparenten Fenster 95 eingestrahlt wird, tritt dann von der Oberfläche des transparenten Umlenkprismas am ersten Umlenkpunkt in die Flüssigkeit aus und wird dort diffus verteilt bzw. gestreut und kann den Lichtdetektor 97 folglich nicht mehr erreichen. Der Lichtdetektor 97 gibt deshalb kein Signal aus, was gleichbedeutend mit dem Füllstand "voll" ist.

Wird mehr und mehr Flüssigkeit dem Behälter 90 entnommen, sinkt der Flüssigkeitspegel immer weiter ab, bis der Reflexionskörper 91 auf dem Boden 94 in der Flüssigkeitskammer 99 des Behälters 90 aufliegt. Der Reflexionskörper 91 ist dann in der gezeigten Position P und ein Null-Pegel der Flüssigkeit ist gegeben, bei dem der Behälter 90 geleert ist. An der Grenzfläche zwischen dem Umlenkprisma bzw. dem Reflexionskörper 91 und der Luft im Behälter 90 wird dann das Licht von der Lichtquelle 96 umgelenkt, nämlich an den beiden Umlenkpunkten, und zum Photodetektor 97 zurückgeworfen, der an seinem Ausgang folglich ein elektrisches Signal erzeugt, das einen Füllstand "leer" anzeigt. Ein entsprechender Strahlengang ist in der Figur 14 für die Position P eingezeichnet.

## Patentansprüche

1. System zum Feststellen eines Flüssigkeitsstands einer Flüssigkeit in einer Flüssigkeitskammer eines Behälters (1, 40, 60, 70, 90), insbesondere von Tinte in einer Tintenpatrone, mit einer Lichtquelle (11, 46, 66, 76, 96), die in die Flüssigkeitskammer des Behälters (1, 40, 60, 70, 90) strahlt, einem Reflexionskörper (2, 30, 42, 61, 71, 91), der als Schwimmer ausgelegt ist, sich in der Flüssigkeitskammer des Behälters (1, 40, 60, 70, 90) in Abhängigkeit vom Füllstand der Flüssigkeit bewegt und das Licht in Abhängigkeit von seiner Bewegung unterschiedlich reflektiert, und einem Lichtdetektor (10, 47, 67, 77, 97) der in Abhängigkeit von der Bewegung oder der erreichten Position des Reflexionskörpers (2, 30, 42, 61, 71, 91) eine unterschiedliche Lichtmenge empfängt, wobei die Lichtquelle (11, 46, 66, 76, 96) derart angeordnet ist, dass diese durch ein in einer Behälterwandung vorgesehenes lichtdurchlässiges Fenster (9, 45, 65, 75, 95) in die Flüssigkeitskammer strahlt.

2. System nach Anspruch 1, **dadurch gekennzeichnet, dass** der Reflexionskörper (2, 30, 42) eine Oberfläche mit Abschnitten unterschiedlichen Reflexionsvermögens hat.

3. System nach Anspruch 2, **dadurch gekennzeichnet, dass** ein Abschnitt der Oberfläche des Reflexionskörpers (2, 30, 42, 61, 71, 91) eine Vertiefung (21, 32, 43) hat.

4. System nach Anspruch 3, **dadurch gekennzeichnet, dass** die Vertiefung (21, 32, 43) zwei Seitenflächen hat, die sich orthogonal zueinander erstrecken.

5. System nach Anspruch 3 oder 4, **dadurch gekennzeichnet, dass** die Vertiefung (21, 32, 43) eine Ungleichverteilung der Masse des Reflexionskörpers (2, 30, 42) erzeugt.

6. System nach mindestens einem der Ansprüche 3 bis 5, **dadurch gekennzeichnet, dass** mehrere zueinander gleichförmige oder ungleichförmige Vertiefungen (21, 32) an der Oberfläche des Reflexionskörpers (30) vorgesehen sind.

7. System nach Anspruch 6, **dadurch gekennzeichnet, dass** der Reflexionskörper (2, 30, 42) ein Zylinder ist.

8. System nach Anspruch 7, **dadurch gekennzeichnet, dass** eine Vertiefung oder mehrere Vertiefungen am Umfang des Zylinders (2, 30, 42) ausgebildet ist bzw. sind.

9. System nach Anspruch 8, **dadurch gekennzeichnet, dass** zwei Vertiefungen (21, 32) gegenüberliegend zueinander am Umfang des Zylinders ausgebildet sind.

10. System nach mindestens einem der Ansprüche 3 bis 9, **gekennzeichnet durch** eine Einlage (7) in einer Vertiefung (21).

11. System nach Anspruch 10, **dadurch gekennzeichnet, dass** die Einlage (7) ein Ungleichgewicht des Reflexionskörpers (2) erzeugt.

12. System nach mindestens einem der Ansprüche 3 bis 11, **dadurch gekennzeichnet, dass** der Reflexionskörper (2) einen Hohlraum oder mehrere Hohlräume (3, 4) aufweist.

13. System nach Anspruch 12, **dadurch gekennzeichnet, dass** der Hohlraum bzw. die Hohlräume (3, 4) des Reflexionskörpers (2) in die Flüssigkeitskammer des Behälters (1) offen ist bzw. sind.

14. System nach mindestens einem der Ansprüche 3 bis 13, **dadurch gekennzeichnet, dass** der Reflexionskörper (1) im wesentlichen ein Zylinder ist und dass sich mindestens ein zylindrischer Hohlraum (3, 4) parallel zu einer Mittenachse (16) des Zylinders und durchgängig zwischen den Endflächen des Zylinders erstreckt.

15. System nach Anspruch 14, **dadurch gekennzeichnet, dass** sich zwei zylindrische Hohlräume (3, 4) innerhalb des Zylinders erstrecken.

16. System nach Anspruch 15, **dadurch gekennzeichnet, dass** eine erste fiktive Ebene, in der die Achse des Zylinders liegt, den Zylinder in eine erste Hälfte und in eine zweite Hälfte unterteilt, dass in der ersten Hälfte eine Vertiefung (21) und ein erster Hohlraum (3) ausgebildet ist, dass in der zweiten Hälfte ein zweiter Hohlraum (4) ausgebildet ist und dass sich die Mittenachsen der beiden Hohlräume (3, 4) und die Mittenachse (16) des Zylinders parallel zueinander in einer zweiten fiktiven Ebene erstrecken, die die erste fiktive Ebene schiefwinklig in der Mittenachse (16) des Zylinders schneidet.

17. System nach Anspruch 16, **dadurch gekennzeichnet, dass** der Abstand der Mittenachse des ersten Hohlraums (3) zu der Mittenachse (16) des Zylinders und der Abstand der Mittenachse des zweiten Hohlraums (4) zu der Mittenachse (16) des Zylinders gleich sind.

18. System nach Anspruch 16 oder Anspruch 17, **dadurch gekennzeichnet, dass** in der zweiten Hälfte eine weitere Vertiefung (32) ausgebildet ist.

19. System nach mindestens einem der vorstehenden Ansprüche, **dadurch gekennzeichnet, dass** der Reflexionskörper (2, 30) drehbar um seine Mittenachse (16) in der Flüssigkeitskammer des Behälters angebracht ist.

20. System nach mindestens einem der Ansprüche 1 bis 18, **dadurch gekennzeichnet, dass** der Reflexionskörper (42) mittels einer starren Aufhängung (41) an einem Gelenk (44) an einer Wand des Behälters (40) angebracht ist und dass der Reflexionskörper (42) auf einer Kreisbahn um eine Gelenkachse des Gelenks (44) bewegbar ist.

21. System nach mindestens einem der vorstehenden Ansprüche, **dadurch gekennzeichnet, dass** der Reflexionskörper eine inhomogene Massenverteilung aufweist.

22. System nach mindestens einem der Ansprüche 1 bis 4, **dadurch gekennzeichnet, dass** eine Führung (62, 92) vorgesehen ist, die den Reflexionskörper (61, 91) bei seiner Bewegung mit dem Pegel der Flüssigkeit in der Flüssigkeitskammer des Behälters führt.

23. System nach mindestens einem der Ansprüche 1 bis 4, **dadurch gekennzeichnet, dass** der Reflexionskörper (71) mit einer flexiblen oder starren Aufhängung (72) an einem Deckel oder einer Wand des Behälters (70) angebracht ist, und dass sich der Reflexionskörper (71) mit dem Pegel der Flüssigkeit in der Flüssigkeitskammer des Behälters (70) mitbewegt.

24. System nach Anspruch 22 oder Anspruch 23, **dadurch gekennzeichnet, dass** der Reflexionskörper (61, 71) eine Unterseite hat, an der eine Vertiefung (63, 73) ausgebildet ist, und dass die Wände der Vertiefung (63, 73) den Lichtstrahl von der Lichtquelle umlenken.

25. System nach Anspruch 1, **dadurch gekennzeichnet, dass** der Reflexionskörper (91) ein Schwimmer in der Form eines transparenten Prismas oder Umlenkprismas ist, das sich mit dem Pegel der Flüssigkeit in der Flüssigkeitskammer des Behälters (90) mitbewegt.

26. System nach Anspruch 25, **dadurch gekennzeichnet, dass** das Prisma den Lichtstrahl von der Lichtquelle (96) auf den Lichtdetektor (97) umlenkt, wenn der Behälter (90) leer ist.

27. System nach Anspruch 25 oder 26, **dadurch gekennzeichnet, dass** eine Führung (92) in der Flüssigkeitskammer des Behälters (90) vorgesehen ist, die den Reflexionskörper (91) bzw. Schwimmer entlang seiner geradlinigen Bewegungsstrecke führt.

28. System nach Anspruch 27, **dadurch gekennzeichnet, dass** das Fenster (75) einen stumpfen Vorsprung (79) hat, der in das Innere (81) des Behälters (70) hineinsteht.

29. Behälter, insbesondere für die Tinte eines Tintenstrahldruckers, mit einer Behälterwandung, die eine mit Flüssigkeit befüllbare und entleerbare Flüssigkeitskammer des Behälters umschließt, und mit einem Reflexionskörper (2, 30, 42, 61, 71, 91), der als Schwimmer ausgelegt ist, der sich in der Flüssigkeitskammer des Behälters in Abhängigkeit vom Füllstand der Flüssigkeit bewegt und der in die Flüssigkeitskammer eingekoppeltes Licht in Abhängigkeit von seiner Bewegung oder seiner erreichten Position unterschiedlich reflektiert, wobei in der Behälterwandung ein lichtdurchlässiges Fenster (9, 45, 64, 75, 95) vorgesehen ist.

30. Behälter nach Anspruch 29, **dadurch gekennzeichnet, dass** im Gebrauch eine Lichtquelle (11, 46, 66, 76, 96) derart angeordnet ist, dass Licht durch das Fenster (9, 45, 64, 75, 95) in die Flüssigkeitskammer einstrahlbar ist.

31. Behälter nach Anspruch 30, **dadurch gekennzeichnet, dass** der Reflexionskörper (2, 30, 42) eine Oberfläche mit Abschnitten unterschiedlichen Reflexionsvermögens hat.

32. Behälter nach Anspruch 31, **dadurch gekennzeichnet, dass** ein Abschnitt der Oberfläche des Reflexionskörpers eine Vertiefung (21, 32, 43) hat.

33. Behälter nach Anspruch 32, **dadurch gekennzeichnet, dass** die Vertiefung (21, 32, 43) zwei Seitenflächen hat, die sich orthogonal zueinander erstrecken.

34. Behälter nach Anspruch 32 oder Anspruch 33, **dadurch gekennzeichnet, dass** die Vertiefung (21, 32, 43) eine Ungleichverteilung der Masse des Reflexionskörpers (2, 30, 42) erzeugt.

35. Behälter nach einem der Ansprüche 32 bis 34, **dadurch gekennzeichnet, dass** mehrere zueinander gleichförmige oder ungleichförmige Vertiefungen (21, 32) an der Oberfläche des Reflexionskörpers (30) vorgesehen sind.

36. Behälter nach Anspruch 35, **dadurch gekennzeichnet, dass** der Reflexionskörper (2, 30, 42) ein Zylinder ist.

37. Behälter nach Anspruch 36, **dadurch gekennzeichnet, dass** eine Vertiefung oder mehrere Vertiefungen am Umfang des Zylinders (2, 30, 42) ausgebildet ist bzw. sind.

38. Behälter nach Anspruch 37, **dadurch gekennzeichnet, dass** zwei Vertiefungen (21, 32) gegenüberliegend zueinander am Umfang des Zylinders ausgebildet sind.

39. Behälter nach mindestens einem der Ansprüche 32 bis 37, **gekennzeichnet durch** eine Einlage (7) in einer Vertiefung (21).

40. Behälter nach Anspruch 39, **dadurch gekennzeichnet, dass** die Einlage (7) eine Ungleichgewicht des Reflexionskörpers (2) erzeugt.

41. Behälter nach mindestens einem der Ansprüche 29 bis 40, **dadurch gekennzeichnet, dass** der Reflexionskörper (2) einen Hohlraum oder mehrere Hohlräume (3, 4) aufweist.

42. Behälter nach Anspruch 41, **dadurch gekennzeichnet, dass** der Hohlraum bzw. die Hohlräume (3, 4) des Reflexionskörpers (2) in die Kammer des Behälters (1) offen sind.

43. Behälter nach mindestens einem der Ansprüche 29 bis 42, **dadurch gekennzeichnet, dass** der Reflexionskörper (1) im wesentlichen ein Zylinder ist und dass sich mindestens ein zylindrischer Hohlraum (3, 4) parallel zu einer Mittenachse (16) des Zylinders und durchgängig zwischen den Endflächen des Zylinders erstreckt.

44. Behälter nach Anspruch 43, **dadurch gekennzeichnet, dass** sich zwei zylindrische Hohlräume (3, 4) innerhalb des Zylinders erstrecken.

45. Behälter nach Anspruch 44, **dadurch gekennzeichnet, dass** eine erste fiktive Ebene, in der die Mittenachse des Zylinders liegt, den Zylinder in eine erste Hälfte und in eine zweite Hälfte unterteilt, dass in der ersten Hälfte eine Vertiefung (21) und ein erster Hohlraum (3) ausgebildet ist, dass in der zweiten Hälfte ein zweiter Hohlraum (4) ausgebildet ist und dass sich die Mittenachsen der beiden Hohlräume (3, 4) und die Mittenachse (16) des Zylinders parallel zueinander in einer zweiten fiktiven Ebene erstrecken, die die erste fiktive Ebene schiefwinklig in der Mittenachse (16) des Zylinders schneidet.

46. Behälter nach Anspruch 45, **dadurch gekennzeichnet, dass** der Abstand der Mittenachse des ersten Hohlraums (3) zu der Mittenachse (16) des Zylinders und der Abstand der Mittenachse des zweiten Hohlraums (4) zu der Mittenachse (16) des Zylinders gleich sind.

47. Behälter nach Anspruch 45 oder Anspruch 46, **dadurch gekennzeichnet, dass** in der zweiten Hälfte eine weitere Vertiefung (32) ausgebildet ist.

48. Behälter nach mindestens einem der Ansprüche 29 bis 47, **dadurch gekennzeichnet, dass** der Reflexionskörper (2, 30) drehbar um seine Mittenachse (16) in der Flüssigkeitskammer des Behälters angebracht ist.

49. Behälter nach mindestens einem der Ansprüche 29 bis 48, **dadurch gekennzeichnet, dass** der Reflexionskörper (42) mittels einer starren Aufhängung (41) an einem Gelenk (44) an einer Wand des Behälters (40) angebracht ist und dass der Reflexionskörper (42) auf einer Kreisbahn um eine Gelenkachse des Gelenks (44) bewegbar ist.

50. Behälter nach mindestens einem der Ansprüche 29 bis 49, **dadurch gekennzeichnet, dass** der Reflexionskörper eine inhomogene Massenverteilung aufweist.

51. Behälter nach mindestens einem der Ansprüche 29 bis 33, **dadurch gekennzeichnet, dass** eine Führung (62, 92) vorgesehen ist, die den Reflexionskörper (61, 91) bei seiner Bewegung mit dem Pegel der Flüssigkeit in der Flüssigkeitskammer des Behälters führt.

52. Behälter nach mindestens einem der Ansprüche 29 bis 33, **dadurch gekennzeichnet, dass** der Reflexionskörper (71) ein Schwimmer ist, der mit einer flexiblen Aufhängung (72) an einem Deckel oder einer Wand des Behälters (70) angebracht ist, und dass sich der Reflexionskörper (71) mit dem Pegel der Flüssigkeit in der Flüssigkeitskammer des Behälters (70) mitbewegt.

53. Behälter nach Anspruch 51 oder 52, **dadurch gekennzeichnet, dass** der Reflexionskörper (61, 71) eine Unterseite hat, an der eine Vertiefung (63, 73) ausgebildet ist, und dass die Wände der Vertiefung (63, 73) Licht umlenken.

54. Behälter nach Anspruch 29, **dadurch gekennzeichnet, dass** der Reflexionskörper (91) ein Schwimmer in der Form eines transparenten Prismas oder Umlenkprismas ist, das sich mit dem Pegel der Flüssigkeit in der Kammer des Behälters (90) mitbewegt.

55. Behälter nach Anspruch 54, **dadurch gekennzeichnet, dass** das Prisma Licht umlenkt, wenn der Behälter leer ist.

56. Behälter nach Anspruch 54 oder 55, **dadurch gekennzeichnet, dass** eine Führung (92) in der Flüssigkeitskammer des Behälters (90) vorgesehen ist, die den Reflexionskörper (91) bzw. Schwimmer entlang seiner geradlinigen Bewegungsstrecke führt.

57. Behälter nach mindestens einem der Ansprüche 29 bis 56, **dadurch gekennzeichnet, dass** das Fenster (75) einen stumpfen oder ebenen Vorsprung (79) aufweist, der in die Kammer (81) des Behälters (70) hineinsteht.

## Claims

1. A system for detecting the level of liquid in a liquid compartment of a container (1, 40, 60, 70, 90), especially ink in an ink cartridge, the system comprising a light source (11, 46, 66, 76, 96) which shines into the liquid compartment of the container (1, 40, 60, 70, 90), a reflecting member (2, 30, 42, 61, 71, 91) in the form of a float which moves in the compartment of the container (1, 40, 60, 70, 90) in dependence on the level of liquid and reflects light variously in dependence on its motion, and a light detector (10, 47, 67, 77, 97) which receives a varying amount of light in dependence on the motion or the position reached by the reflecting member (2, 30, 42, 61, 71, 91), wherein the light source (11, 46, 66, 76, 96) is positioned so that it shines into the liquid compartment through a light-permeable window (9, 45, 65, 75, 95) in a wall of the compartment.

2. A system according to claim 1, **characterised in that** the reflecting member (2, 30, 42) has a surface with portions differing in reflectivity.

3. A system according to claim 2, **characterised in that** a portion of the surface of the reflecting member (2, 30, 42, 61, 71, 91) is formed with a recess (21, 32, 43).

4. A system according to claim 3, **characterised in that** the recess (21, 32, 43) has two sides which extend at right angles to one another.

5. A system according to claim 3 or claim 4, **characterised in that** the recess (21, 32, 43) results in non-uniform distribution of the mass of the reflecting member (2, 30, 42).

6. A system according to at least one of claims 3 to 5, **characterised in that** a number of identical or different recesses (21, 32) are provided on the surface of the reflecting member (30).

7. A system according to claim 6, **characterised in that** the reflecting member (2, 30, 42) is a cylinder.

8. A system according to claim 7, **characterised in that** one or more recesses are formed on the periphery of the cylinder (2, 30, 42).

9. A system according to claim 8, **characterised in that** two recesses (21, 32) are formed opposite one another on the cylinder periphery.

10. A system according to at least one of claims 3 to 9, **characterised by** an insert (7) in a recess (21),

11. A system according to claim 10, **characterised in that** the recess (7) produces an imbalance in the weight of the reflecting member (2).

12. A system according to at least one of claims 3 to 11, **characterised in that** the reflecting member (2) has one or more cavities (3, 4),

13. A system according to claim 12, **characterised in that** the cavity or cavities (3, 4) in the reflecting member (2) open into the liquid compartment of the container (1).

14. A system according to at least one of claims 3 to 13, **characterised in that** the reflecting member (1) is substantially a cylinder and at least one cylindrical cavity (3, 4) extends parallel with a centre axis (16) of the cylinder and all the way between the end surfaces of the cylinder.

15. A system according to claim 14, **characterised in that** two cylindrical cavities (3, 4) extend inside the cylinder.

16. A system according to claim 15, **characterised in that** a first imaginary plane containing the cylinder axis divides the cylinder into a first half and a second half, a recess (21) and a first cavity (3) are formed in the first half, a second cavity (4) is formed in the second half, and the centre axes of the two half-cavities (3, 4) and the centre axis (16) of the cylinder extend parallel with one another in a second imaginary plane which intersects the first imaginary plane at an oblique angle along the centre axis (16) of the cylinder.

17. A system according to claim 16, **characterised in that** the distance of the centre axis of the first cavity (3) from the centre axis (16) of the cylinder is the same as the distance of the centre axis of the second cavity (4) from the centre axis (16) of the cylinder.

18. A system according to claim 16 or claim 17. **characterised in that** another recess (32) is formed in the second half.

19. A system according to at least one of the preceding claims, **characterised in that** the reflecting member (2, 30) is mounted for rotation around its centre axis (16) in the liquid compartment of the container.

20. A system according to at least one of claims 1 to 18, **characterised in that** the reflecting member (42) is attached to a wall of the container (40) via a rigid suspension means (41) on a link (44), and the reflecting member (42) is movable in a circle around an axis of the link (44).

21. A system according to at least one of the preceding claims, **characterised in that** the reflecting member has a non-uniform mass distribution.

22. A system according to at least one of claims 1 to 4, **characterised in that** a guide (62, 92) is provided for guiding the reflecting member (61, 91) when it moves with the level of liquid in the compartment of the container.

23. A system according to at least one of claims 1 to 4, **characterised in that** the reflecting member (21) is attached to a lid or wall of the container (70) by a flexible or rigid suspension means (72), and the reflecting member (71) moves with the level of liquid in the compartment of the container (70).

24. A system according to claim 22 or claim 23, **characterised in that** the reflecting member (61, 71) has an underside on which a recess (63, 73) is formed, and the walls of the recess (63, 73) deflect the beam from the light source.

25. A system according to claim 1, **characterised in that** the reflecting member (91) is a float in the form of a transparent prism or deflecting prism which moves with the level of liquid in the compartment of the container (90).

26. A system according to claim 25, **characterised in that** the prism directs the beam from the light source (96) on to the light detector (97) when the container (90) is empty.

27. A system according to claim 25 or claim 26, **characterised in that** a guide (92) is provided in the compartment of the container (90) and guides the reflecting member (91) or float along a straight path.

28. A system according to claim 27, **characterised in that** the window (75) has a truncated projection (79) which extends into the interior (81) of the container (70).

29. A container, especially for ink in an ink jet printer, comprising a container wall which surrounds a compartment of the container which can be filled with liquid or emptied, and also comprising a reflecting member (2, 30, 42, 61, 71, 91) in the form of a float which moves in the container compartment in dependence on the level of liquid and reflects the light coupled into the compartment in a manner which varies with its movement or position, wherein a light-permeable window (9, 45, 64, 75, 95) is provided in the container wall.

30. A container according to claim 29, **characterised in that** in operation a light source (11, 46, 66, 76, 96) is so disposed that light can shine through the window (9, 45, 64, 75, 95) into the compartment.

31. A container according to claim 30, **characterised in that** the reflecting member (2, 30, 42) has a surface with portions varying in reflectivity.

32. A container according to claim 31, **characterised in that** a portion of the surface of the reflecting member has a recess (21, 32, 43).

33. A container according to claim 32, **characterised in that** the recess (21, 32, 43) has two sides at right angles to one another.

34. A container according to claim 32 or claim 33, **characterised in that** the recess (21, 32. 43) results in a non-uniform distribution of the mass of the reflecting member (2, 30, 42).

35. A container according to any of claims 32 to 34, **characterised in that** a number of identical or different recesses (21, 32) are provided on the surface of the reflecting member (30).

36. A container according to claim 35, **characterised in that** the reflecting member (2, 30, 42) is a cylinder.

37. A container according to claim 36, **characterised in that** one or more recesses are formed on the periphery of the cylinder (2, 30, 42).

38. A container according to claim 37, **characterised in that** two recesses (21, 32) are formed opposite one another on the cylinder periphery.

39. A container according to at least one of claims 32 to 37, **characterised by** an insert (7) in a recess (21).

40. A container according to claim 39, **characterised in that** the insert (7) unbalances the weight of the reflecting member (2).

41. A container according to at least one of claims 29 to 40, **characterised in that** the reflecting member (2) has one or more cavities (3, 4).

42. A container according to claim 41, **characterised in that** the cavity or cavities (3, 4) in the reflecting member (2) open into the compartment of the container (1).

43. A container according to at least one of claims 29 to 42, **characterised in that** the reflecting member (1) is substantially a cylinder and at least one cylindrical cavity (3, 4) extends parallel with a centre axis (16) of the cylinder and all the way between the end surfaces of the cylinder.

44. A container according to claim 43, **characterised in that** two cylindrical cavities (3, 4) extend inside the cylinder.

45. A container according to claim 44, **characterised in that** a first imaginary plane containing the centre axis of the cylinder divides the cylinder into a first half and a second half, a recess (21) and a first cavity (3) are formed in the first half, a second cavity (4) is formed in the second half and the centre axes of the two cavities (3, 4) and the centre axis (16) of the cylinder extend parallel with one another in a second imaginary plane which intersects the first imaginary plane at an oblique angle along the centre axis (16) of the cylinder.

46. A container according to claim 45, **characterised in that** the distance of the centre axis of the first cavity (3) from the centre axis (16) of the cylinder is the same as the distance of the centre axis of the second cavity (4) from the centre axis (16) of the cylinder.

47. A container according to claim 45 or claim 46, **characterised in that** another recess (32) is formed in the second half.

48. A container according to at least one of claims 29 to 47, **characterised in that** the reflecting member (2, 30) is mounted so as to be rotatable around its centre axis (16) in the liquid compartment of the container.

49. A container according to at least one of claims 29 to 48, **characterised in that** the reflecting member (42) is attached by a rigid suspension (41) to a link (44) on a wall of the container (40) and the reflecting member (42) is movable in a circle around an axis of the link (44),

50. A container according to at least one of claims 29 to 49, **characterised in that** the reflecting member has a non-uniform mass distribution.

51. A container according to at least one of claims 29 to 33, **characterised in that** a guide (62, 92) is provided and guides the reflecting member (61, 91) when it moves with the level of liquid in the compartment of the container.

52. A container according to at least one of claims 29 to 33, **characterised in that** the reflecting member (71) is a float attached by a flexible suspension means (72) to a lid or wall of the container (70), and the reflecting member (71) moves with the level of liquid in the compartment of the container (70).

53. A container according to claim 51 or claim 52, **characterised in that** the reflecting member (61, 71) has an underside on which a recess (63, 73) is formed, and the walls of the recess (63, 73) deflect light.

54. A container according to claim 29, **characterised in that** the reflecting member (91) is a float in the form of a transparent prism or deflecting prism which moves with the level of liquid in the compartment of the container (90).

55. A container according to claim 54, **characterised in that** the prism deflects light when the container is empty.

56. A container according to claim 54 or claim 55, **characterised in that** a guide (92) is provided in the liquid compartment of the container (90) and guides the reflecting member (91) or float along a straight path.

57. A container according to at least one of claims 29 to 56, **characterised in that** the window (75) has a truncated or flat projection (79) which extends into the compartment (81) of the container (70).

## Revendications

1. Système pour détecter le niveau d'un liquide dans un réservoir à liquide d'un récipient (1, 40, 60, 70, 90), notamment d'encre dans une cartouche d'encre, comprenant une source de lumière (11, 46, 66, 76, 96) qui rayonne dans le réservoir à liquide du récipient (1, 40, 60, 70, 90), un corps de réflexion (2, 30, 42, 61, 71, 91) qui est conçu comme flotteur, bouge dans le réservoir à liquide du récipient (1, 40, 60, 70, 90) en fonction du niveau du liquide et reflète la lumière de différentes manières en fonction de son mouvement, et un détecteur de lumière (10, 47, 67, 77, 97) qui capte une quantité variable de lumière en fonction du mouvement ou de la position atteinte du corps de réflexion (2, 30, 42, 61, 71, 91), la source de lumière (11, 46, 66, 76, 96) étant agencée de manière à ce que celle-ci rayonne dans le réservoir à liquide à travers une fenêtre transparente (9, 45, 65, 75, 95) prévue dans une paroi du récipient.

2. Système selon la revendication 1, **caractérisé en ce que** le corps de réflexion (2, 30, 42) présente une surface comprenant des sections de capacités de réflexions différentes.

3. Système selon la revendication 2, **caractérisé en ce qu'**une section de la surface du corps de réflexion (2, 30, 42, 61, 71, 91) comporte un creux (21, 32, 43).

4. Système selon la revendication 3, **caractérisé en ce que** le creux (21, 32, 43) présente deux faces latérales s'étendant orthogonalement l'une par rapport à l'autre.

5. Système selon la revendication 3 ou 4, **caractérisé en ce que** le creux (21, 32, 43) génère une répartition inégale de la masse du corps de réflexion (2, 30, 42).

6. Système selon au moins l'une des revendications 3 à 5, **caractérisé en ce que** plusieurs creux (21, 32) de forme égale ou inégale les uns par rapport aux autres sont prévus sur la surface du corps de réflexion (30).

7. Système selon la revendication 6, **caractérisé en ce que** le corps de réflexion (2, 30, 42) est un cylindre.

8. Système selon la revendication 7, **caractérisé en ce qu'**un creux ou plusieurs creux est ou sont constitué(s) sur la périphérie du cylindre (2, 30, 42).

9. Système selon la revendication 8, **caractérisé en ce que** deux creux (21, 32) sont constitués en regard l'un par rapport à l'autre sur la périphérie du cylindre.

10. Système selon au moins l'une des revendications 3 à 9, **caractérisé par** une insertion (7) dans un creux (21).

11. Système selon la revendication 10, **caractérisé en ce que** l'insertion (7) génère un défaut de balance du corps de réflexion (2).

12. Système selon au moins l'une des revendications 3 à 11, **caractérisé en ce que** le corps de réflexion (2) présente un vide ou plusieurs vides (3, 4).

13. Système selon la revendication 12, **caractérisé en ce que** le vide ou les vides (3, 4) du corps de réflexion (2) est ou sont ouvert(s) vers le réservoir à liquide du récipient (1).

14. Système selon au moins l'une des revendications 3 à 13, **caractérisé en ce que** le corps de réflexion (1) est essentiellement un cylindre et **en ce qu'**au moins un vide cylindrique (3, 4) s'étend parallèlement à un axe central (16) du cylindre et en continu entre les faces d'extrémités du cylindre.

15. Système selon la revendication 14, **caractérisé en ce que** deux vides (3, 4) cylindriques s'étendent à l'intérieur du cylindre.

16. Système selon la revendication 15, **caractérisé en ce qu'**un premier plan fictif dans lequel se trouve l'axe du cylindre divise le cylindre dans une première moitié et dans une deuxième moitié, **en ce qu'**un creux (21) et un premier vide (3) sont constitués dans la première moitié, **en ce qu'**un deuxième vide (4) est constitué dans la deuxième moitié et **en ce que** les axes centraux des deux vides (3, 4) et l'axe central (16) du cylindre s'étendent parallèlement l'un par rapport à l'autre dans un deuxième plan fictif qui coupe le premier plan fictif en angle oblique à l'axe central (16) du cylindre.

17. Système selon la revendication 16, **caractérisé en ce que** l'écart entre l'axe central du premier vide (3) et l'axe central (16) du cylindre ainsi que l'écart entre l'axe central du deuxième vide (4) et l'axe central (16) du cylindre sont identiques.

18. Système selon la revendication 16 ou la revendication 17, **caractérisé en ce qu'**un autre creux (32) est constitué dans la deuxième moitié.

19. Système selon au moins l'une des revendications précédentes, **caractérisé en ce que** le corps de réflexion (2, 30) est monté pivotant autour de son axe central (16) dans le réservoir à liquide du récipient.

20. Système selon au moins l'une des revendications 1 à 18, **caractérisé en ce que** le corps de réflexion (42) est monté sur une articulation (44) sur une paroi du récipient (40) à l'aide d'une suspension (41) rigide et que le corps de réflexion (42) est mobile sur une trajectoire circulaire autour d'un axe d'articulation de l'articulation (44).

21. Système selon au moins l'une des revendications ci-dessus, **caractérisé en ce que** le corps de réflexion présente une répartition non homogène de la masse.

22. Système selon au moins l'une des revendications 1 à 4, **caractérisé en ce qu'**il est prévu un guidage (62, 92) qui guide le corps de réflexion (61, 91) dans son mouvement avec le niveau du liquide dans le réservoir à liquide du récipient.

23. Système selon au moins l'une des revendications 1 à 4, **caractérisé en ce que** le corps de réflexion (71) est monté sur un couvercle ou sur une paroi du récipient (70) à l'aide d'une suspension flexible ou rigide et **en ce que** le corps de réflexion (71) est entraîné avec le niveau du liquide dans le réservoir à liquide du récipient (70).

24. Système selon la revendication 22 ou la revendication 23, **caractérisé en ce que** le corps de réflexion (61, 71) présente une face inférieure sur laquelle est constitué un creux (63, 73) et **en ce que** les parois du creux (63, 73) dévient le rayon de lumière de la source de lumière.

25. Système selon la revendication 1, **caractérisé en ce que** le corps de réflexion (91) est un flotteur sous forme de prisme transparent ou de prisme déviateur qui est entraîné avec le niveau du liquide dans le réservoir à liquide du récipient (90).

26. Système selon la revendication 25, **caractérisé en ce que** le prisme dévie le rayon de lumière de la source de lumière (96) sur le détecteur de lumière (97) lorsque le récipient (90) est vide.

27. Système selon la revendication 25 ou 26, **caractérisé en ce qu'**un guidage (92) est prévu dans le réservoir à liquide du récipient (90) qui guide le corps de réflexion (91) ou le flotteur le long de sa trajectoire de mouvement droite.

28. Système selon la revendication 27, **caractérisé en ce que** la fenêtre (75) présente un épaulement tronqué (79) qui fait saillie à l'intérieur (81) du récipient (70).

29. Récipient, destiné notamment à l'encre d'une imprimante à jet d'encre, comprenant une paroi de récipient qui entoure un réservoir à liquide du récipient apte à être rempli de liquide et à être vidé, et un corps de réflexion (2, 30, 42, 61, 71, 91) qui est conçu comme flotteur qui bouge dans le réservoir à liquide du récipient en fonction du niveau du liquide et qui reflète en fonction de son mouvement ou de sa position atteinte de manière différente de la lumière intégrée par couplage dans le réservoir à liquide, une fenêtre transparente (9, 45, 64, 75, 95) étant prévue dans la paroi du récipient.

30. Récipient selon la revendication 29, **caractérisé en ce qu'**à l'usage, une source de lumière (11, 46, 66, 76, 96) est agencée de sorte que la lumière puisse être introduite par rayonnement dans le réservoir à liquide à travers la fenêtre (9, 45, 64, 75, 95).

31. Récipient selon la revendication 30, **caractérisé en ce que** le corps de réflexion (2, 30, 42) présente une surface comprenant des sections aux capacités différentes de réflexion.

32. Récipient selon la revendication 31, **caractérisé en ce qu'**une section de la surface du corps de réflexion présente un creux (21, 32, 43).

33. Récipient selon la revendication 32, **caractérisé en ce que** le creux (21, 32, 43) présente deux faces latérales s'étendant orthogonalement l'une par rapport à l'autre.

34. Récipient selon la revendication 32 ou la revendication 33, **caractérisé en ce que** le creux (21, 32, 43) génère une répartition inégale de la masse du corps de réflexion (2, 30, 42).

35. Récipient selon l'une des revendications 32 à 34, **caractérisé en ce que** plusieurs creux de forme égale ou inégale les uns par rapport aux autres (21, 32) sont prévus sur la surface du corps de réflexion (30).

36. Récipient selon la revendication 35, **caractérisé en ce que** le corps de réflexion (2, 30, 42) est un cylindre.

37. Récipient selon la revendication 36, **caractérisé en ce qu'**un creux ou plusieurs creux est ou sont constitué(s) sur la périphérie du cylindre (2, 30, 42).

38. Récipient selon la revendication 37, **caractérisé en ce que** deux creux (21, 32) sont constitués en regard l'un par rapport à l'autre sur la périphérie du cylindre.

39. Récipient selon au moins l'une des revendications 32 à 37, **caractérisé par** une insertion (7) dans un creux (21).

40. Récipient selon la revendication 39, **caractérisé en ce que** l'insertion (7) génère un défaut de balance du corps de réflexion (2).

41. Récipient selon au moins l'une des revendications 29 à 40, **caractérisé en ce que** le corps de réflexion (2) présente un creux ou plusieurs creux (3, 4).

42. Récipient selon la revendication 41, **caractérisé en ce que** le vide ou les vides (3, 4) du corps de réflexion (2) est ou sont ouvert(s) dans le réservoir à liquide du récipient (1).

43. Récipient selon au moins l'une des revendications 29 à 42, **caractérisé en ce que** le corps de réflexion (1) est essentiellement un cylindre et **en ce qu'**au moins un vide (3, 4) cylindrique s'étend parallèlement à un axe central (16) du cylindre et en continu entre les faces d'extrémités du cylindre.

44. Récipient selon la revendication 43, **caractérisé en ce que** deux vides cylindriques (3, 4) s'étendent à l'intérieur du cylindre.

45. Récipient selon la revendication 44, **caractérisé en ce qu'**un premier plan fictif dans lequel se trouve l'axe central du cylindre divise le cylindre en une première moitié et une deuxième moitié, **en ce qu'**un creux (21) et un premier vide (3) sont constitués dans la première moitié, **en ce qu'**un deuxième vide (4) est constitué dans la deuxième moitié et **en ce que** les axes centraux des deux vides (3, 4) et l'axe central (16) du cylindre s'étendent parallèlement l'un par rapport à l'autre dans un deuxième plan fictif qui coupe le premier plan fictif en angle oblique à l'axe central (16) du cylindre.

46. Récipient selon la revendication 45, **caractérisé en ce que** l'écart entre l'axe central du premier vide (3) et l'axe central (16) du cylindre ainsi que l'écart entre l'axe central du deuxième vide (4) et l'axe central (16) du cylindre sont identiques.

47. Récipient selon la revendication 45 ou la revendication 46, **caractérisé en ce qu'**un autre creux (32) est constitué dans la deuxième moitié.

48. Récipient selon au moins l'une des revendications 29 à 47, **caractérisé en ce que** le corps de réflexion (2, 30) est monté pivotant autour de son axe central (16) dans le réservoir à liquide du récipient.

49. Récipient selon au moins l'une des revendications 29 à 48, **caractérisé en ce que** le corps de réflexion (42) est monté sur une articulation (44) sur une paroi du récipient (40) à l'aide d'une suspension rigide (41) et **en ce que** le corps de réflexion (42) est mobile sur une trajectoire circulaire autour d'un axe d'articulation de l'articulation (44).

50. Récipient selon au moins l'une des revendications 29 à 49, **caractérisé en ce que** le corps de réflexion présente une répartition de masse non homogène.

51. Récipient selon au moins l'une des revendications 29 à 33, **caractérisé en ce qu'**il est prévu un guidage (62, 92) qui guide le corps de réflexion (61, 91) lors de son mouvement avec le niveau du liquide dans le réservoir à liquide du récipient.

52. Récipient selon au moins l'une des revendications 29 à 33, **caractérisé en ce que** le corps de réflexion (71) est un flotteur qui est monté sur un couvercle ou une paroi du récipient (70) à l'aide d'une suspension flexible (72) et **en ce que** le corps de réflexion (71) est entraîné avec le niveau du liquide dans le réservoir à liquide du récipient (70).

53. Récipient selon la revendication 51 ou 52, **caractérisé en ce que** le corps de réflexion (61, 71) présente une face inférieure sur laquelle est constitué un creux (63, 73) et **en ce que** les parois du creux (63, 73) dévient de la lumière.

54. Récipient selon la revendication 29, **caractérisé en ce que** le corps de réflexion (91) est un flotteur sous forme de prisme transparent ou de prisme déviateur qui est entraîné avec le niveau du liquide dans le réservoir du récipient (90).

55. Récipient selon la revendication 54, **caractérisé en ce que** le prisme dévie de la lumière lorsque le récipient est vide.

56. Récipient selon la revendication 54 ou 55, **caractérisé en ce qu'**un guidage (92) est prévu dans le réservoir à liquide du récipient (90) qui guide le corps de réflexion (91) ou le flotteur le long une trajectoire de mouvement droite.

57. Récipient selon au moins l'une des revendications 29 à 56, **caractérisé en ce que** la fenêtre (75) présente un épaulement (79) tronconique ou plan qui fait saillie dans le réservoir (81) du récipient (70).
